# FASCICULE DE BREVET EUROPEEN

(11) **EP 1 354 293 B1**
(45) Date de publication et mention de la délivrance du brevet: **26.08.2009**
(21) Numéro de dépôt: 01907660.3
(22) Date de dépôt: 22.01.2001
(51) Int. Cl.: G06F 3/033

(54) **SOURIS-BAGUE**
RINGMAUS
RING-MOUSE

(43) Date de publication de la demande: 22.10.2003
(73) Titulaire: Guedj, Franck, 75015 Paris (FR)
(72) Inventeur: Guedj, Franck, 75015 Paris (FR)
(86) Numéro de dépôt international: PCT/FR2001/000197
(87) Numéro de publication internationale: WO 2002/058002

(56) Documents cités:
- DE-U- 29 712 688
- FR-A- 2 800 187
- US-A- 4 905 001
- US-A- 5 638 092
- PATENT ABSTRACTS OF JAPAN vol. 1999, no. 02, 26 février 1999 (1999-02-26) & JP 10 301706 A (NEC NIIGATA LTD), 13 novembre 1998 (1998-11-13)

## Description

La présente invention concerne un dispositif de commande du déplacement du pointeur d'écran informatique ainsi que des actions habituellement générées par le déclenchement des clics gauche et droit des souris traditionnelles

Ces actions sont habituellement effectuées à l'aide d'une souris située à coté du clavier et nécessitent le déplacement des doigts vers cette dernière, sollicitant à chaque fois un effort du poignet ainsi que du bras et de l'épaule d'où l'apparition à la longue de rhumatismes chez certains utilisateurs. Ces déplacements répétitifs demandent aussi parfois un détournement du regard pour attraper la souris et finissent par produire une déconcentration de l'esprit sans compter le temps perdu sur un travail si l'on additionne les temps nécessaires à ces allers retours.

Le brevet JP-A-10 301 706 décrit une souris en forme de cylindre et se fixant sur l'index de la main. Un bouton poussoir permet le clic et le positionnement du curseur. Il est actionné par le pouce.

Le dispositif selon l'invention permet de remédier à ces inconvénients. Il est constitué selon une première caractéristique par un module de plastique souple comportant deux bagues ouvertes à insérer sur l'index et le majeur et d'un module de type boîtier plat surmontant le premier module et comprenant la partie électronique du système. Les bagues comportent chacune sous leurs parties inférieures un contacteur électrique de type bouton poussoir actionnable par pression de la partie inférieure des deuxièmes phalanges lors de la flexion des doigts. Ces boutons poussoir agissent en tant que clic gauche et clic droit. Le deuxième module comporte sur le coté un dispositif de type boule ou plaque tactile ou autre système destiné au déplacement du pointeur et actionné par le pouce. Il inclut aussi la partie électronique à savoir circuit imprimé et composants nécessaires pour émettre les signaux électriques vers l'ordinateur soit par câble soit par émission radio ou infrarouge. Ainsi l'utilisateur a de manière définitive l'usage des commandes sous et sur les phalanges tout en disposant de la liberté totale de sa main et de ses doigts.

Selon des modes particuliers de réalisation :
- Le système de déplacement du pointeur peur être rattaché sur la bague de l'index coté pouce et donc ne plus faire partie du module 2.
- Le module 2 peut être rattaché au poignet et relié au module 1 par un câble électrique.

Les dessins annexés illustrent l'invention :

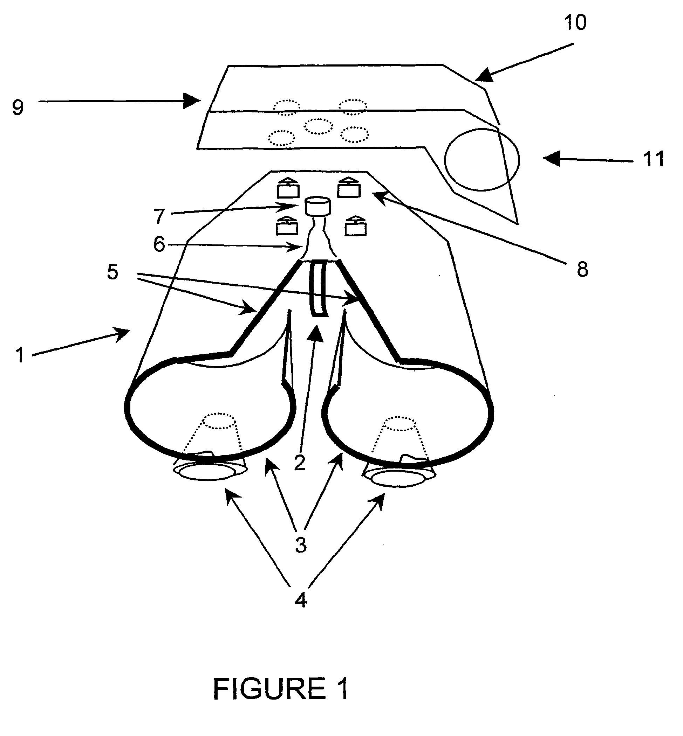

La figure 1 représente de face les modules séparés du dispositif de l'invention.

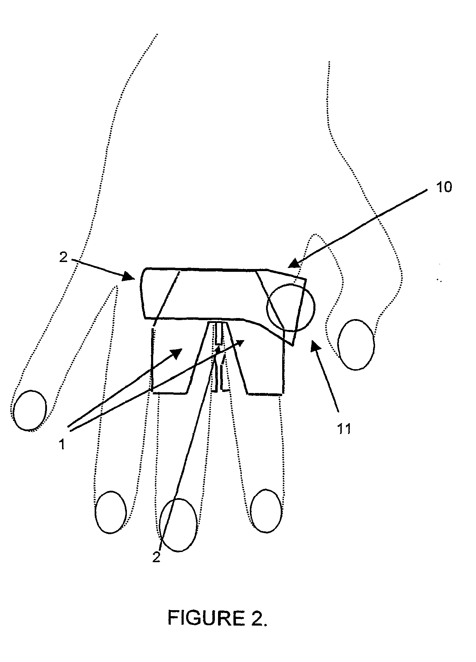

La figure 2 représente le dispositif de l'invention positionné sur la main vue de haut:

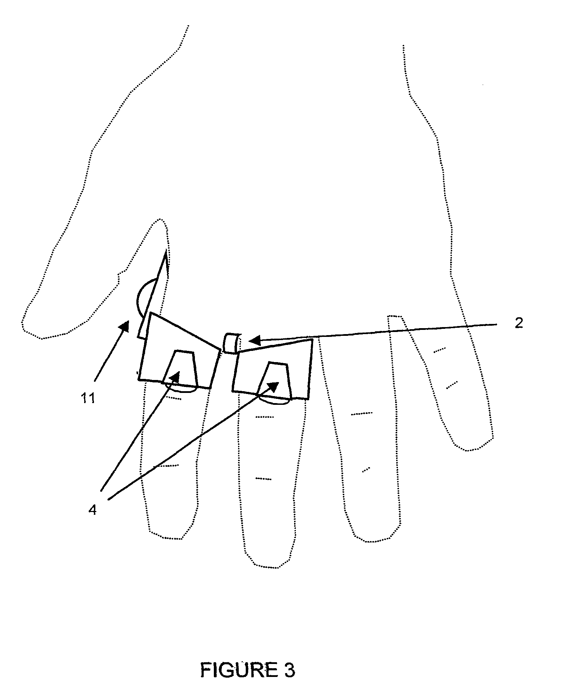

La figure 3 représente le dispositif de l'invention coté paume de la main.

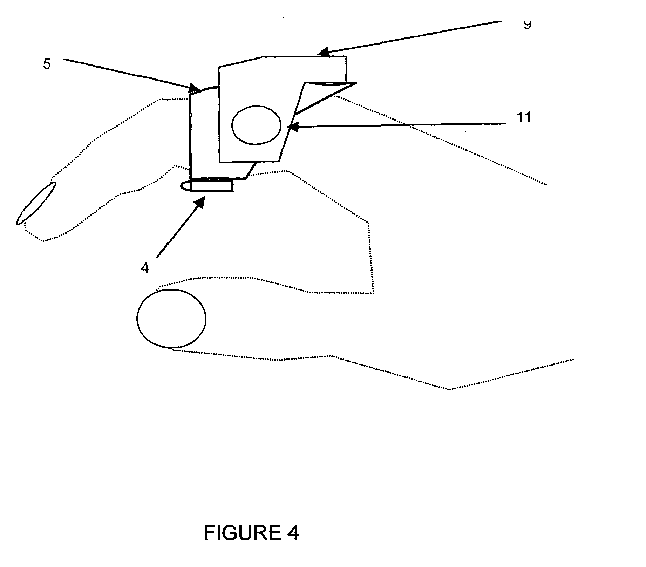

La figure 4 représente le dispositif de l'invention vue de coté.
La figure 5 représente une variante du dispositif de l'invention positionné sur la main vue de haut.

En référence à ces figures le dispositif comporte un premier module de plastique souple (1) formant deux bagues ouvertes reliées par leurs parties supérieures. Le module est bloqué sur les phalanges grâce à une patte de blocage (2) s'appuyant sur l'interstice des doigts. Les bagues (3) sont pourvues sous leurs parties inférieures de boutons poussoirs contacteurs (4).

Ils sont positionnés de manière à ce que le bouton de pression soit en évidence par rapport au bord de la bague. Les bagues sont pourvues de gouttières (5) permettant l'isolation des fils électriques (6) des contacteurs vers un plot de connexion (7) au système électronique. Quatre autres plots (8) assurent le verrouillage du deuxième module. En référence à ces figures le dispositif comporte un deuxième module de type boîtier plat (9) contenant les composants électroniques destiné à traduire et à émettre les signaux électriques vers l'ordinateur. L'un de ses cotés (10) comporte le dispositif de commande de déplacement du pointeur à boule (11), tactile ou autre système.

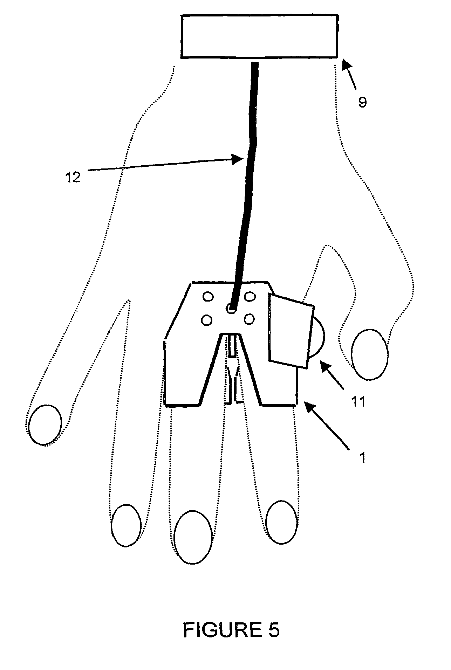

Dans la forme de réalisation selon la figure 5 , le dispositif de déplacement du pointeur est rattaché sur le coté pouce de la bague de l'index du premier module et le module 2 attaché par un bracelet au poignet, les deux modules étant alors connectés entre eux par un câble électrique (12).

Selon une variante non illustrée le module 2 pourrait offrir une possibilité de rotation de 90° sur son axe pour permettre un usage ambidextre du dispositif.

Selon une deuxième variante non illustrée le module 1 est articulé en 3 parties : un socle et deux bagues.

A titre de prévention le module 2 peut adopter toutes formes géométriques ou libres y compris les formes à caractère commercial.

Le dispositif selon l'invention est particulièrement destiné à tout utilisateur de programmes informatiques.

## Revendications

1. Dispositif de commande du déplacement du pointeur d'écran informatique ainsi que des actions habituellement générées par le déclenchement des clics gauche et droit des souris traditionnelles **caractérisé en ce qu'**il comporte un premier module de plastique souple (1) présentant deux bagues ouvertes (2) dans lesquelles sont introduits l'index et le majeur d'une main, comportant chacune sous leurs parties inférieures un contacteur électrique de type bouton poussoir (3) actionnables par pression de la partie inférieure des deuxièmes phalanges lors de la flexion des doigts, surmonté par un deuxième module (9) de type boîtier plat incluant la partie électronique du dispositif ainsi que le système de déplacement du pointeur (11) le tout rendant la main totalement autonome. Une patte (2) solidaire du module 1 assure le blocage du dispositif sur les doigts.

2. Dispositif selon la revendication 1 **caractérisé en ce que** le module 1 peut être constitué d'un socle sur lequel sont articulées les deux bagues.

3. Dispositif selon la revendication 1 ou la revendication 2 **caractérisé en ce que** le système de déplacement du pointeur est rattaché à la bague de l'index coté pouce et le module 2 attaché au poignet, les deux modules étant connecté par câble.

4. Dispositif selon la revendication 1 ou la revendication 2 **caractérisé en ce que** le module 2 pivote de 90 degrés sur son axe pour permettre un usage ambidextre.

5. Dispositif selon l'une quelconque des revendications précédentes **caractérisé en ce que** le deuxième module peut être relié à l'ordinateur soit par câble soit par émission radio ou infrarouge.

## Claims

1. Device for controlling the movement of a pointer on a computer screen, as well as the actions normally triggered by clicking the traditional left and right mouse buttons, comprising one flexible plastic module (1) with two open rings (2) into which the user inserts the index finger and the middle finger of one hand, both rings having an electrical pushbutton contactor (3) under their lower parts operated by pressing on the lower part of the second phalanxes when flexing the fingers, surmounted by a second module (9) in the form of a flat box containing the device's electronics as well as the pointer movement system (11), the entire device making the hand fully autonomous. A clasp (2) attached to module 1 allows to block the device on the tingers.

2. Device according to claim 1 **characterized in that** module 1 may comprise a base on which the two rings are articulated.

3. Device according to claim 1 or claim 2 **characterized in that** the pointer movement system is attached to the index finger ring on the side nearest the thumb, and model 2 is attached to the wrist, both modules being connected by a cable.

4. Device according to claim 1 or claim 2 **characterized in that** module 2 pivots by 90 degrees on its axis to enable ambidextrous use.

5. Device according to any of the preceding claims **characterized in that** the second module may be connected to the computer either by a cable or by radiofrequency or infrared transmissions.

## Patentansprüche

1. Steuerungsvorrichtung zur Bewegung des Cursors eines Bildschirms sowie der üblicherweise durch linken und rechten Mausklick gesteuerten Funktionen, **gekennzeichnet dadurch, dass** sie ein erstes Modul aus Weichplastik (1) mit zwei offenen Ringen (2) besitzt, in welche der Zeigefinger und der Mittelfinger einer Hand eingeführt werden und die beide auf ihrer Unterseite einen elektrischen Tastschalter (3) besitzen, der durch den Druck der Unterseite des zweiten Fingergliedes beim Krümmen der Finger betätigt wird, sowie dass sich auf diesem ein zweites Modul (9) in Form eines flachen Gehäuses befindet, in dem die Elektronik der Vorrichtung sowie das System zum Bewegen der Cursors (11) untergebracht ist, so dass die gesamte Baugruppe der Hand völlige Autonomie verleiht. Eine mit dem Modul 1 fest verbundene Lasche (2) gewährleistet den festen Sitz der Vorrichtung auf den Fingern.

2. Vorrichtung gemäß Anspruch 1, **gekennzeichnet dadurch, dass** das Modul 1 aus einem Sockel bestehen kann, auf dem die beiden Ringe schwenkbar angeordnet sind.

3. Vorrichtung gemäße Patentanspruch 1 oder Patentanspruch 2, **gekennzeichnet dadurch, dass** das System zum Bewegen des Cursors dem Ring des Zeigefingers auf der Daumenseite zugeordnet ist und dass das Modul 2 am Handgelenk befestigt ist, wobei beide Module durch Kabel angeschlossen sind.

4. Vorrichtung gemäß Patentanspruch 1 oder Patentanspruch 2, **gekennzeichnet dadurch, dass** das Modul 2 um 90° um seine Achse geschwenkt werden kann, um die Verwendung durch Rechts- und Linkshänder zu gestatten.

5. Vorrichtung gemäß einem der vorstehenden Patentansprüche, **gekennzeichnet dadurch, dass** das zweite Modul entweder durch ein Kabel oder durch eine Funk- oder Infrarotstrahlung mit dem Computer verbunden werden kann.
